# EUROPÄISCHE PATENTSCHRIFT

(11) **EP 1 002 634 B1**
(45) Veröffentlichungstag und Bekanntmachung des Hinweises auf die Patenterteilung: **18.09.2002**
(21) Anmeldenummer: 99113373.7
(22) Anmeldetag: 10.07.1999
(51) Int. Cl.: B29C 47/40, B29C 47/60

(54) **Mehrwellige Schneckenmaschine**
Multiple screw extruder
Machine à plusieurs vis

(30) Priorität: 13.10.1998 DE 19847104
(43) Veröffentlichungstag der Anmeldung: 24.05.2000
(73) Patentinhaber: Blach, Josef A., 74348 Lauffen (DE); Blach, Markus, 74348 Lauffen (DE); Blach, Michael, 74348 Lauffen (DE)
(72) Erfinder: Blach, Josef A., 74348 Lauffen (DE); Blach, Markus, 74348 Lauffen (DE); Blach, Michael, 74348 Lauffen (DE)
(74) Vertreter: Haft, von Puttkamer, Berngruber, Czybulka

(56) Entgegenhaltungen:
- DE-C- 4 127 732
- US-A- 4 202 633
- US-A- 4 600 311

## Beschreibung

Die Erfindung bezieht sich auf eine mehrwellige Schneckenmaschine nach dem Oberbegriff des Anspruchs 1.

Damit die axial hintereinander angeordneten Schneckenelemente auf den achsparallelen Wellen einer solchen Maschine dicht kämmend ineinandergreifen, müssen sie auf den Wellen in Axialrichtung mit höchster Präzision sicher positioniert sein. Dazu werden die, z.B. mit einer Keilverzahnung, auf der Welle axial verschiebbar angeordneten und mit der Welle drehfest verbundenen Schneckenelemente auf der Welle axial dicht vorgespannt, und zwar mit der Wellenspitze, die dazu als Schraubbolzen ausgebildet ist, der in eine axiale Gewindebohrung in dem Wellenende eingeschraubt ist.

Der Anschlag kann beispielsweise durch einen Bund gebildet werden, der durch Abdrehen der Welle entsteht. Da ein solcher Bund mit einem enormen Herstellungsaufwand verbunden ist, ist es aus der DE-C-41 27732 auch bekannt, gemäß dem Oberbegriff des Anspruchs 1 die Welle mit einer Ringnut zu versehen, die einen geteilten Anschlagring aufnimmt. Mit einem solchen Anschlagring in einer Ringnut der Welle wird jedoch bei den hohen axialen Belastungen, denen die Schneckenwellen ausgesetzt sind, insbesondere dem hohen axialen Druck, nicht die gewünschte Präzision erreicht.

Aufgabe der Erfindung ist es, auf einfache Weise eine dauerhafte Positionierung der Schneckenelemente in axialer Richtung mit höchster Präzision bei allen Betriebszuständen der Maschine zu gewährleisten.

Dies wird erfindungsgemäß durch die im Anspruch 1 gekennzeichnete Schneckenmaschine erreicht. In den Unteransprüchen sind vorteilhafte Ausgestaltungen der erfindungsgemäßen Schneckenmaschine wiedergegeben.

Nachstehend ist eine Ausführungsform der Erfindung anhand der beigefügten Zeichnung näher erläutert.

Darin zeigen:
- Fig. 1: eine Ansicht einer Schneckenwelle; und
- Fig. 2: einen Längsschnitt durch einen Teil der Schneckenwelle nach Fig. 1 in vergrößerter Wiedergabe.

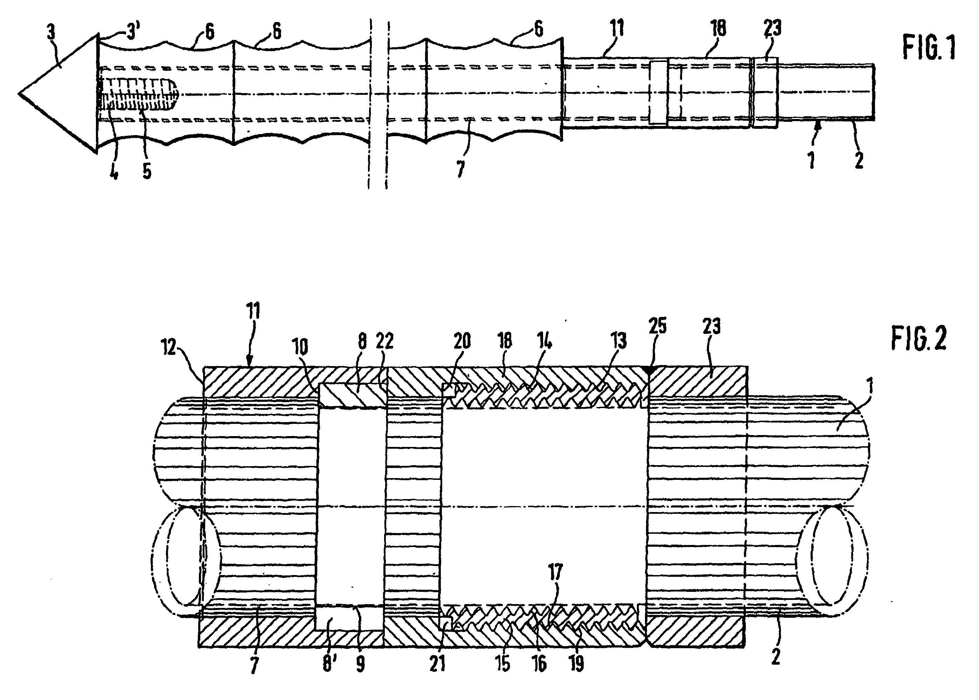

Gemäß Fig. 1 ist an einer beispielsweise gehämmerten, durchgehend verzahnten Welle 1 am rechten Ende an der Keilverzahnung 2 eine nicht dargestellte Kupplung zum Antrieb der Welle 1 befestigt. An dem anderen, linken Ende der Welle 1, also am ausstoßseitigen Ende der Maschine, ist die Wellenspitze 3 befestigt, die dazu als Schraubbolzen 4 ausgebildet ist, der in eine axiale Gewindebohrung 5 in dem Wellenende eingeschraubt ist. Auf der Welle 1 sind axial hintereinander mehrere Schneckenelemente 6 angeordnet, die auf der Welle 1 axial verschiebbar angeordnet und mit der Welle 1 drehfest verbunden sind. Dazu ist die Welle 1 mit einer Keilverzahlung 7 versehen, auf die die Schneckelemente 6 geschoben werden.

Zur axialen Positionierung der Schneckenelemente 6 ist einerseits die Wellenspitze 3 vorgesehen, die mit ihrer Stirnfläche 3' an der Stirnfläche des benachbarten Schneckenelements 6 angreift, und zum anderen ein geteilter Anschlagring 8, der bei 8' geteilt ist.

Der Anschlagring 8 ist gemäß Figur 2 in einer durch einen Einstich gebildeten Ringnut 9 in der Welle 1 angeordnet. Mit seiner den Schneckenelementen 6 zugewandten Stirnseite greift der geteilte Anschlagring 8 an der Radialfläche einer ringförmigen Innenschulter 10 eines hülsenförmigen Zwischenrings 11 an, der axial verschiebbar auf der Welle 1 angeordnet ist. Die ringförmige Innenschulter 10 greift dazu in die Keilverzahnung 7 auf der Welle 1 ein. Die Ringschulter 10 wird durch eine radiale Innenausnehmung in dem Zwischenring 11 gebildet. Mit dieser Innenausnehmung wird der Anschlagring 8 von dem Zwischenring 11 übergriffen. An seiner vom Anschlagring 8 abgewandten Stirnseite 12 des Zwischenrings 11 liegt das benachbarte Schneckenelement 6 dicht an.

Mit der als Schraube ausgebildeten Wellenspitze 3 werden die Schneckenelemente 6 über den Zwischenring 11 gegen den geteilten Anschlagring 8 vorgespannt.

Um den Anschlagring 8 in axialer Richtung mit einer hohen Genauigkeit von z.B. 1/100 mm oder mehr zu positionieren, ist auf der von den Schneckenelementen 6 abgewandten Seite im Abstand von der ersten Ringnut 9 durch einen Einstich in die Welle 1 eine zweite breitere Ringnut 13 gebildet, die mit einem Schraubgewinde 14 versehen ist, das sich über die gesamte axiale Länge der Nut 13 erstreckt.

Auf das Schraubgewinde 14 ist ein geteilter hülsenförmiger Gewindering 15 mit seinem Innengewinde 16 aufgesteckt. Der geteilte Gewindering 15 weist zudem ein Außengewinde 17 auf, das radial über die Welle 1 vorsteht. Der Gewindering 15 ist kürzer ausgebildet als das Gewinde 14 in der Ringnut 13 und auf diese Länge schraubbar.

Auf den Gewindering 15 ist der mit einem Innengewinde 19 versehene hülsenförmige Spannring 18 von der Seite der Schnekkenelemente her aufgeschraubt.

Damit der Spannring 18 verschraubt, also gegenüber dem Gewindering 15 axial bewegt werden kann, ist zwischen der Ringschulter 20 und dem Gewindering 15 ein Ringspalt 21 vorgesehen.

Der Spannring 18, der einen dem Zwischenring 11 entsprechenden Außendurchmesser aufweist, liegt mit seiner den Schnekkenelementen 6 zugewandten Stirnfläche 22 an der benachbarten Stirnfläche des Anschlagrings 8 an. Der Spannring 18 wird gegen den Anschlagring 8 mit einem definierten Drehmoment geschraubt. Dadurch läßt sich der Anschlagring 8 in axialer Richtung genauestens positionieren, und zwar unter allen Betriebszuständen.

Um den Spannring 18 zu fixieren, nachdem er unter definierten Bedingungen gegen den Anschlagring 8 zu dessen präziser Positionierung geschraubt worden ist, muss er mit der Welle 1 drehfest verbunden werden. Dies kann dadurch bewerkstelligt werden, dass auf der von den Schneckenelementen 6 abgewandten Seite des Spannrings 18 ein hülsenförmiger Befestigungsring 23 angeordnet wird, der auf der Welle 1 drehfest befestigt ist, beispielsweise durch die Keilverzahnung 2 auf der Welle 1. Mit dem Befestigungsring 23 wird der Spannring 18 beispielsweise durch eine Verschweißung 25, durch Verlöten oder eine sonstige stoffschlüssige oder formschlüssige Verbindung drehfest verbunden.

## Patentansprüche

1. Mehrwellige Schneckenmaschine mit auf benachbarten Wellen (1) dichtkämmend ineinandergreifenden Schneckenelementen (6), die drehfest auf der Welle (1) angeordnet und gegen einen geteilten Anschlagring (8) in einer Ringnut (9) der Welle (1) vorgespannt sind, **gekennzeichnet durch** ein Schraubgewinde (14) im Abstand von der ersten Ringnut (9) in einer zweiten Ringnut (13) und einen mit der Welle (1) drehfest verbindbaren, gegen den Anschlagring (8) vorspannbaren Spannring (18) mit einem mit dem Schraubgewinde (14) in der zweiten Ringnut (13) in Schraubverbindung stehenden Innengewinde (19).

2. Schneckenmaschine nach Anspruch 1, **dadurch gekennzeichnet, dass** zur Schraubverbindung des Spannrings (18) mit dem Schraubgewinde (14) in der zweiten Ringnut (13) ein geteilter Gewindering (15) vorgesehen ist, der ein in das Schraubgewinde (14) in der zweiten Ringnut (13) eingreifendes Innengewinde (16) und ein in das Innengewinde (19) des Spannrings (18) eingreifendes Außengewinde (17) aufweist.

3. Schneckenmaschine nach Anspruch 1 oder 2, **dadurch gekennzeichnet, dass** zur drehfesten Verbindung des Spannrings (18) mit der Welle (1) ein auf der Welle (1) drehfest angeordneter Befestigungsring (23) vorgesehen ist.

4. Schneckenmaschine nach einem der vorstehenden Ansprüche, **dadurch gekennzeichnet, dass** ein Zwischenring (11) zwischen den Schneckenelementen (6) und dem Anschlagring (8) vorgesehen ist und der Anschlagring (8) an einer Innenschulter (10) des Zwischenrings (11) angreift.

## Claims

1. A multi-shaft screw-type machine with screw elements (6) which intermesh tightly on adjacent shafts (1), being disposed on the shaft (1) so as to rotate in unison and prestressed against a split stop ring (8) in a ring groove (9) of the shaft (1), charcterized by a screw thread (14) spaced from the first ring groove (9) in a second ring groove (13), and a straining ring (18) to be connected with the shaft (1) so as to rotate in unison and prestressed against the stop ring (8) and having an internal thread (19) in screw connection with the screw thread (14) in the second ring groove (13).

2. A screw-type machine according to claim 1, **characterized in that** for the screw connection of the straining ring (18) with the screw thread (14) in the second ring groove (13) a split ring nut (15) is provided which has an internal thread (16) engaging the screw thread (14) in the second ring groove (13), and an external thread (17) engaging the internal thread (19) of the straining ring (18).

3. A screw-type machine according to claim 1 or 2, **characterized in that** for connecting the straining ring (18) with the shaft (1) so as to rotate in unison a fastening ring (23) is disposed on the shaft (1) so as to rotate in unison.

4. A screw-type machine according to any of the above claims, **characterized in that** an intermediate ring (11) is provided between the screw elements (6) and the stop ring (8), and the stop ring (8) acts on an inside shoulder (10) of the intermediate ring (11).

## Revendications

1. Machine à vis sans fin à plusieurs arbres comportant des éléments de vis sans fin (6) s'engageant les uns dans les autres et s'engrenant de manière dense sur des arbres (1) voisins, lesquels sont agencés solidaires en rotation sur l'arbre (1) et sont précontraints contre une bague de butée (8) fendue dans une gorge annulaire (9) de l'arbre (1), **caractérisée par** un filetage (14) à distance de la première gorge annulaire (9) dans une deuxième gorge annulaire (13) et par une bague de serrage (18) qui peut être reliée solidaire en rotation avec l'arbre (1) et précontrainte contre la bague de butée (8) avec un taraudage (19) en liaison par vissage avec le filetage (14) dans la deuxième gorge annulaire (13).

2. Machine à vis sans fin selon la revendication 1, **caractérisée en ce que** pour relier par vissage la bague de serrage (18) au filetage (14) dans la deuxième gorge annulaire (13), il est prévu une bague filetée (15) fendue qui présente un filet intérieur (16) s'engageant dans le filetage (14) dans la deuxième gorge annulaire (13) et un filet extérieur (17) s'engageant dans le filet intérieur (19) de la bague de serrage (18).

3. Machine à vis sans fin selon la revendication 1 ou 2, **caractérisée en ce que** pour relier solidaire en rotation la bague de serrage (18) à l'arbre (1), il est prévu une bague de fixation (23) agencée solidaire en rotation sur l'arbre (1).

4. Machine à vis sans fin selon l'une quelconque des revendications précédentes, **caractérisée en ce qu'**une bague intermédiaire (11) est prévue entre les éléments de vis sans fin (6) et la bague de butée (8), et **en ce que** la bague de butée (8) attaque un épaulement intérieur (10) de la bague intermédiaire (11).
